# FASCICULE DE BREVET EUROPEEN

(11) **EP 3 398 806 B1**
(45) Date de publication et mention de la délivrance du brevet: **07.10.2020**
(21) Numéro de dépôt: 18170842.1
(22) Date de dépôt: 04.05.2018
(51) Int. Cl.: B60N 2/14, B60N 3/06, B61D 33/00

(54) **DISPOSITIF DE ROTATION D'UN SIÈGE, NOTAMMENT POUR VÉHICULE FERROVIAIRE**
GESICHERTE VORRICHTUNG ZUM DREHEN EINES SITZES, INSBESONDERE FÜR EIN SCHIENENFAHRZEUG
DEVICE FOR ROTATING A SEAT, IN PARTICULAR FOR A RAILWAY VEHICLE

(30) Priorité: 04.05.2017 FR 1753940
(43) Date de publication de la demande: 07.11.2018
(73) Titulaire: ALSTOM Transport Technologies, 93400 Saint-Ouen (FR)
(72) Inventeur: PAILLER, Christophe, 17180 Perigny (FR); LUGOL, Jean-Louis, 17540 Verines (FR); FEBVRE, Julien, 27000 Evreux (FR)
(74) Mandataire: Lavoix

(56) Documents cités:
- DE-A1-102014 013 955
- GB-A- 774 510
- US-A- 2 591 598

## Description

La présente invention concerne un dispositif de rotation d'un siège, notamment pour véhicule ferroviaire.

Un tel dispositif de rotation est plus particulièrement destiné à équiper une salle voyageurs d'un véhicule ferroviaire, notamment un train à grande vitesse ou tout train grandes lignes.

En effet, le dispositif de rotation a pour but de permettre d'orienter le siège correspondant dans le sens de marche du véhicule, afin d'améliorer le confort du passager utilisant ce siège.

Ainsi, avant chaque trajet emprunté par le véhicule ferroviaire, un opérateur actionne le dispositif de rotation pour orienter le siège dans le bon sens.

Des exemples de dispositif de rotation sont connus d'après DE 10 2014 013955 A1 et GB 774 510 A.

La présente invention a notamment pour but de fournir un dispositif de rotation pouvant être mis en œuvre de manière rapide, simple et ergonomique.

A cet effet, l'invention a notamment pour objet un dispositif de rotation d'après la revendication 1.

Un dispositif de rotation selon l'invention peut comporter en outre l'une ou plusieurs des caractéristiques suivantes, prises seules ou selon toutes combinaisons techniquement envisageables :
- Les moyens pneumatiques d'entrainement comportent un vérin pneumatique, comprenant une tige coopérant avec la butée mobile.
- La tige est munie d'une poignée, permettant son déplacement manuel en cas de défaillance des moyens pneumatiques d'entrainement.
- Le dispositif de rotation comporte une structure de support du siège, le premier organe de commande étant formé par une pédale agencée sur la structure de support.
- Les moyens de déverrouillage sont configurés pour rester actifs lorsque le siège est dans une position angulaire intermédiaire, entre les positions angulaires extrêmes.
- La butée mobile est mobile en rotation autour d'une liaison pivot portée par le siège.
- Le siège est équipé d'un repose-pieds arrière mobile entre une position d'utilisation et une position relevée, le dispositif de rotation comprenant des moyens d'entrainement du repose-pieds vers sa position relevée lors de la rotation du siège.
- Le dispositif de rotation selon l'une quelconque des revendications précédentes, comportant une structure de support du siège, et dans lequel la structure de support comporte une butée de calage latéral du siège dans la première ou seconde position extrême.
- La structure de support comprend deux épaulements propres à coopérer avec des moyens d'encastrement du siège sur cette structure de support lorsque le siège est dans l'une des positions angulaires extrêmes

L'invention sera mieux comprise à la lecture de la description qui va suivre, donnée uniquement à titre d'exemple et faite en se référant aux figures annexées, parmi lesquelles :
- la figure 1 est une vue de profil d'un siège de véhicule ferroviaire, équipé d'un dispositif de rotation selon un exemple de mode de réalisation de l'invention ;
- la figure 2 est une vue en perspective d'un support du siège de la figure 1 ;
- la figure 3 est une vue en perspective de moyens pneumatiques de déverrouillage équipant le siège de la figure 1,
- les figures 4 et 5 sont des vues de profil représentant partiellement les moyens pneumatiques de déverrouillage de la figure 3, dans une position de verrouillage et une position de déverrouillage respectivement.

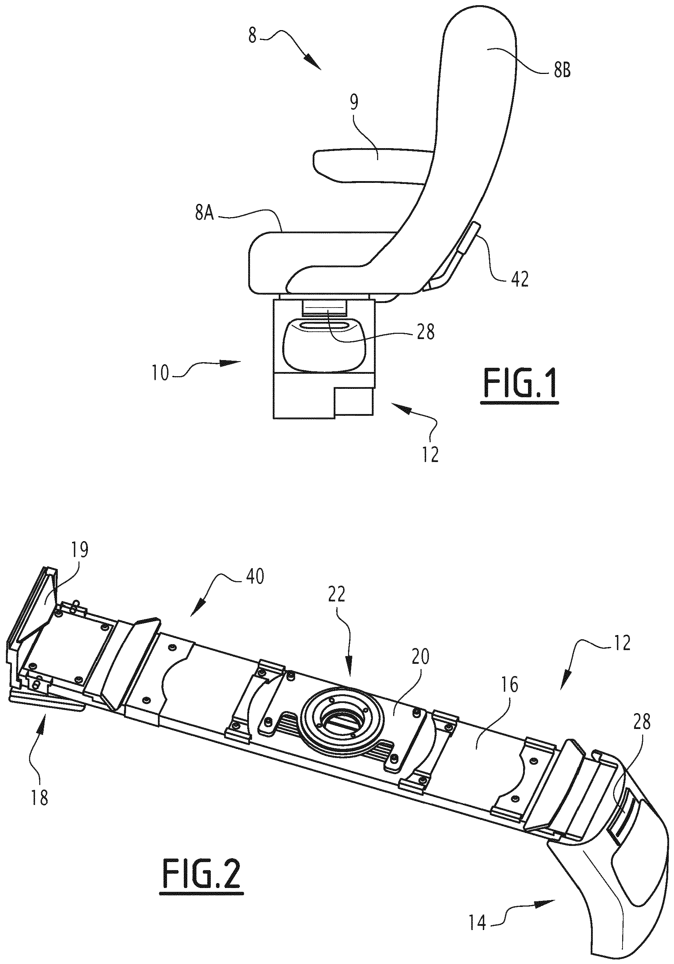

On a représenté, sur la figure 1, un siège 8 destiné à équiper un véhicule ferroviaire, et plus particulièrement destiné à équiper une salle voyageurs du véhicule ferroviaire.

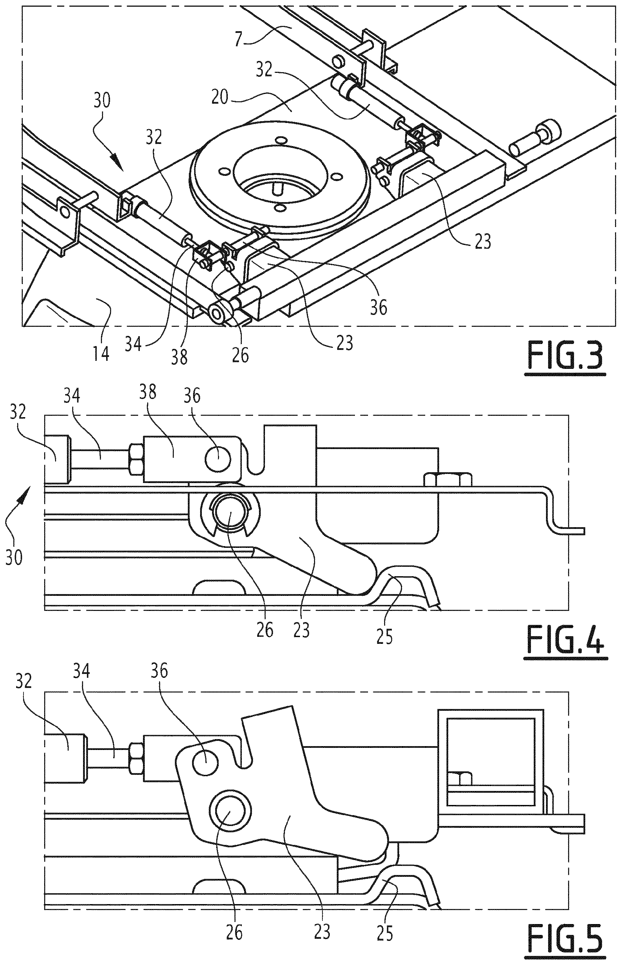

Dans l'exemple décrit, le siège 8 est du type simple, destiné à être utilisé par une personne. Un tel siège simple comporte un bâti 7 (visible sur la figure 3), une assise 8A et un dossier 8B portés par le bâti 7, et au moins un accoudoir 9, notamment deux accoudoirs 9 disposés de part et d'autre de l'assise 8A.

En variante, le siège 8 pourrait être du type double, destiné à être utilisé par deux personnes. Un tel siège double comporte deux assises disposées l'une à côté de l'autre, et deux dossiers, chacun prolongeant une assise respective. Un siège double comporte également des accoudoirs, par exemple trois accoudoirs (un accoudoir entre les assises, et les autres de part et d'autre du siège double) ou quatre accoudoirs (deux accoudoirs de part et d'autre de chaque assise).

Le siège 8 est équipé d'un dispositif 10 de rotation, permettant la rotation du siège 8 autour d'un axe vertical, entre deux positions angulaires extrêmes. Le dispositif de rotation 10 permet par exemple une rotation du siège de 180°, permettant d'aligner le siège avec une direction longitudinale du train, dans un sens ou un autre.

Le dispositif de rotation 10 comporte une structure 12 de support du siège 8, représentée plus en détail sur la figure 2.

La structure de support 12 comporte un pied 14 destiné à être tourné vers un couloir adjacent au siège 8, un plateau de support 16 porté par le pied 14, et un organe de fixation 18. Dans l'exemple décrit, l'organe de fixation 18 permet la fixation de la structure de support 12 à une paroi latérale délimitant la salle voyageurs. En variante, l'organe de fixation 18 pourrait être formé par un autre pied de forme similaire à celle du pied 14.

Avantageusement, l'organe de fixation 18 porte une butée 19 de calage du siège 8, limitant les mouvements latéraux du siège 8 lorsque le siège 8 est verrouillé en position.

La structure de support 12 comporte un socle 20 de réception du siège 8, rotatif autour de l'axe vertical entre des première et seconde positions angulaires extrêmes, correspondant à des sens opposés respectifs dans la direction longitudinale du train. Le socle 20 est lié au plateau de support 16 au moyen d'une liaison pivot 22 définie autour de l'axe vertical.

Le dispositif de rotation 10 comporte par ailleurs des moyens de verrouillage du siège 8 dans les deux positions angulaires extrêmes. Les moyens de verrouillage comportent par exemple au moins un premier élément de verrouillage 23 porté par le siège 8, et au moins un second élément de verrouillage 25 complémentaire porté par la structure de support 12. Le premier élément de verrouillage 23 coopère avec le second élément de verrouillage 25 lorsque le siège 8 est verrouillé en position.

Plus particulièrement, le premier élément de verrouillage 23 forme une butée mobile portée par le siège 8, notamment par le bâti 7, et le second élément de verrouillage 25 forme une butée fixe portée par la structure de support 12.

Avantageusement, les moyens de verrouillage comportent deux seconds éléments de verrouillage 25, à savoir une première butée fixe coopérant avec la butée mobile 23 lorsque le siège est dans la première position angulaire extrême, et une seconde butée fixe coopérant avec la butée mobile 23 lorsque le siège est dans la seconde position angulaire extrême.

La butée mobile 23 est mobile entre une position de verrouillage dans laquelle elle se trouve au moins en partie au niveau de la première ou seconde butée fixe 25 correspondante (comme cela est représenté sur la figure 4), et une position de déverrouillage dans laquelle elle se trouve entièrement au-dessus de la première ou seconde butée fixe 25 correspondante (comme cela est représenté sur la figure 5).

Dans la position de verrouillage, la butée mobile 23 vient en butée avec la butée fixe 25 correspondante, empêchant ainsi toute rotation du siège 8.

En revanche, en position de déverrouillage, la butée mobile 23 s'étend au-dessus de la butée fixe 25 correspondante, si bien que les butées 23, 25 n'entravent pas la rotation du siège 8.

De préférence, la butée mobile 23 est mobile en rotation autour d'une liaison pivot 26 portée par le siège 8.

Avantageusement, les moyens de verrouillage comportent deux butées mobiles 23, chacune coopérant avec une butée fixe 25 respective, dans chaque position extrême du siège 8.

Le dispositif de rotation 10 comporte par ailleurs des moyens de déverrouillage du siège 8, comportant au moins un organe de commande pneumatique 28 et des moyens pneumatiques 30 d'entrainement de la butée mobile 23 depuis sa position de verrouillage vers sa position de déverrouillage lorsque l'organe de commande 28 est actionné.

Par exemple, l'organe de commande 28 est formé par une pédale agencée sur la structure de support 12, et plus particulièrement sur le pied 14 de la structure de support 12. Le pied 14 étant agencé du côté du couloir adjacent au siège 8, la pédale 28 est accessible depuis ce couloir, et peut être actionnée par une action d'un pied d'un opérateur. La pédale 28 présente donc des dimensions suffisamment importantes pour permettre aisément un tel actionnement par le pied de l'opérateur.

Avantageusement, la pédale 28 présente une surface accessible antidérapante. Par exemple, à cet effet, la surface accessible est pourvue d'un gaufrage.

La pédale 28 est par exemple articulée par coulissement dans le pied 14, cette articulation étant par exemple assurée au moyen de bagues de friction. Un ressort de rappel est agencé dans le pied 14, pour le rappel élastique de la pédale 28 dans sa position initiale après actionnement. Le coulissement de la pédale 28 est de préférence limité par des butées mécaniques.

La pédale 28 est avantageusement agencée dans une partie supérieure du pied 14, et elle est de préférence au moins partiellement masquée par l'assise.

La pédale 28, lorsqu'elle est actionnée, enclenche un capteur pneumatique commandant les moyens pneumatiques d'entrainement 30.

Avantageusement, les moyens pneumatiques d'entrainement 30 comportent un vérin pneumatique 32 porté par le bâti 7, et comprenant une tige 34 coopérant avec la butée mobile 23. Par exemple, la tige 34 est reliée à la butée mobile 23 par une liaison pivot 36 d'axe décalé par rapport à l'axe de la liaison pivot 26. Ainsi, le déplacement de la tige 34 entraine le pivotement de la butée mobile 23 autour de la liaison pivot 26.

De préférence, la tige 34 est munie d'une poignée 38, permettant son déplacement manuel en cas de défaillance des moyens pneumatiques d'entrainement 30.

Dans le cas où les moyens de verrouillage comportent deux butées mobiles 23, les moyens de déverrouillage comportent alors deux vérins 32, chacun relié à une butée mobile 23 respective. Ces deux vérins 32 sont commandés par le même organe de commande 28, par l'intermédiaire d'un circuit pneumatique.

Avantageusement, les moyens de déverrouillage sont configurés pour rester actifs lorsque le siège 8 est dans une position angulaire intermédiaire, entre les positions angulaires extrêmes.

Avantageusement, la structure de support comprend deux épaulements 40 propres à coopérer avec des moyens d'encastrement du siège sur la structure de support lorsque le siège est dans l'une des positions angulaires extrêmes.

L'actionnement de l'organe de commande 28 permet le déverrouillage des moyens de verrouillage, c'est-à-dire le déplacement de la butée mobile 23 en position haute par rapport à l'élément de verrouillage 25 correspondant.

Avantageusement, l'actionnement de l'organe de commande 28 associé à un effort de poussé sur le siège permet d'entraîner le siège 8 en rotation, et il est ensuite possible de relâcher l'action sur l'organe de commande 28 et de poursuivre la rotation du siège jusqu'à l'une des positions angulaires extrêmes.

De manière optionnelle, le siège 8 est équipé d'un repose-pieds arrière 42 mobile entre une position d'utilisation et une position relevée. Le dispositif de rotation 10 comprend alors avantageusement des moyens d'entrainement du repose-pieds 42 vers sa position relevée lors de la rotation du siège 8, afin que ce repose-pieds 42 ne gêne pas la rotation du siège 8.

Par exemple, les moyens d'entrainement du repose-pieds 42 comportent un levier coopérant avec le repose-pieds 42 en position d'utilisation, le levier étant actionné lors de la rotation du siège, par exemple en venant en contact d'un bossage prévu à cet effet, faisant ainsi basculer le repose-pieds 42 vers sa position relevée.

On notera que l'invention n'est pas limitée au mode de réalisation précédemment décrit, mais pourrait présenter diverses variantes complémentaires, ces variantes étant comprises dans le périmètre défini par les revendications.

Les moyens de déverrouillage pourraient notamment, en variante, comporter deux organes de commande pneumatique ou plus. Dans ce cas, on peut prévoir que le déverrouillage ne soit activé que lorsque les deux organes de commande sont actionnés simultanément.

## Revendications

1. Dispositif (10) de rotation autour d'un axe vertical pour un siège (8), ledit siège (8) étant destiné à équiper un véhicule ferroviaire, comportant :
- des moyens de verrouillage du siège (8) dans des première et seconde positions angulaires extrêmes de ce siège (8), les moyens de verrouillage comprenant au moins une butée mobile (23) adaptée pour être portée par le siège (8), destinée à coopérer avec une première ou une seconde butée fixe (25) complémentaire lorsque le siège (8) est respectivement dans l'une de ses première ou seconde positions angulaires extrêmes, et
- des moyens de déverrouillage du siège (8), comprenant :
• au moins un organe de commande pneumatique (28), et
• des moyens pneumatiques (30) d'entrainement de la butée mobile (23) depuis sa position de verrouillage vers sa position de déverrouillage lorsque l'organe de commande (28) est actionné,
**caractérisé en ce que** la butée mobile (23) est mobile entre une position de verrouillage dans laquelle elle se trouve au niveau de la première ou seconde butée fixe (25) correspondante, et une position de déverrouillage dans laquelle elle se trouve au-dessus de la première ou seconde butée fixe (25) correspondante.

2. Dispositif de rotation (10) selon la revendication 1, dans lequel les moyens pneumatiques d'entrainement (30) comportent un vérin pneumatique (32), comprenant une tige (34) coopérant avec la butée mobile (23).

3. Dispositif de rotation (10) selon la revendication 2, dans lequel la tige (34) est munie d'une poignée (36), permettant son déplacement manuel en cas de défaillance des moyens pneumatiques d'entrainement (30).

4. Dispositif de rotation (10) selon l'une quelconque des revendications précédentes, comportant une structure (12) de support du siège (8), le premier organe de commande (28) étant formé par une pédale agencée sur la structure de support (12).

5. Dispositif de rotation (10) selon l'une quelconque des revendications précédentes, dans lequel les moyens de déverrouillage sont configurés pour rester actifs lorsque le siège (8) est dans une position angulaire intermédiaire, entre les positions angulaires extrêmes.

6. Dispositif de rotation (10) selon l'une quelconque des revendications précédentes, dans lequel la butée mobile (23) est mobile en rotation autour d'une liaison pivot (26) portée par le siège (8).

7. Dispositif de rotation (10) selon l'une quelconque des revendications précédentes, dans lequel le siège (8) est équipé d'un repose-pieds arrière (42) mobile entre une position d'utilisation et une position relevée, le dispositif de rotation (10) comprenant des moyens d'entrainement du repose-pieds (42) vers sa position relevée lors de la rotation du siège (8).

8. Dispositif de rotation selon l'une quelconque des revendications précédentes, comportant une structure (12) de support du siège (8), et dans lequel la structure de support (12) comporte une butée (19) de calage latéral du siège (8) dans la première ou seconde position extrême.

9. Dispositif de rotation selon l'une des revendications 4 ou 8, dans lequel la structure de support (12) comprend deux épaulements (40) propres à coopérer avec des moyens d'encastrement du siège (8) sur cette structure de support lorsque le siège (8) est dans l'une des positions angulaires extrêmes

10. Dispositif de confort de véhicule ferroviaire, comportant un siège (8), **caractérisé en ce qu'**il comporte un dispositif (10) de rotation du siège (8) selon l'une quelconque des revendications 1 à 9, sur lequel est agencé le siège (8).

## Patentansprüche

1. Vorrichtung (10) zur Rotation um eine vertikale Achse für einen Sitz (8), wobei der Sitz (8) dazu bestimmt ist, ein Schienenfahrzeug auszustatten, aufweisend:
- Mittel zum Verriegeln des Sitzes (8) in einer ersten und einer zweiten Winkelendposition dieses Sitzes (8), wobei die Mittel zum Verriegeln aufweisen wenigstens einen bewegbaren Anschlag (23), der angepasst ist, um von dem Sitz (8) getragen zu werden und der dazu bestimmt ist, mit einem ersten oder einem zweiten komplementären, feststehenden Anschlag (25) zusammenzuwirken, wenn der Sitz (8) jeweilig in einer von seiner ersten oder zweiten Winkelendposition ist,
- Mittel zum Entriegeln des Sitzes (8), aufweisend:
• wenigstens ein pneumatisches Steuerorgan (28) und
• pneumatische Mittel (30) zum Antreiben des bewegbaren Sitzes (23) von dessen Verriegelungs-Position aus zu dessen Entriegelungs-Position, wenn das Steuerorgan (28) betätigt wird,
**dadurch gekennzeichnet, dass** der bewegbare Anschlag (23) bewegbar ist zwischen einer Verriegelungs-Position, in welcher er sich auf Höhe des ersten oder des zweiten feststehenden, korrespondierenden Anschlags (25) befindet,
und einer Entriegelungsposition, in welcher er sich über dem ersten oder dem zweiten feststehenden, korrespondierenden Anschlag (25) befindet.

2. Vorrichtung zur Rotation (10) gemäß Anspruch 1, wobei die pneumatischen Mittel zum Antreiben (30) einen pneumatischen Zylinder (32) aufweisen, der einen Stange (34) aufweist, die mit dem bewegbaren Anschlag (23) zusammenwirkt.

3. Vorrichtung zur Rotation (10) gemäß Anspruch 2, wobei die Stange (34) mit einem Griff (36) versehen ist, der ihre manuelle Verlagerung erlaubt im Falle eines Ausfalls der pneumatischen Mittel zum Antreiben (30).

4. Vorrichtung zur Rotation (10) gemäß irgendeinem der vorigen Ansprüche, aufweisend eine Struktur (12) zum Halten des Sitzes (8), wobei das erste Steuerorgan (28) von einem Pedal gebildet ist, das an der Struktur zum Halten (12) angeordnet ist.

5. Vorrichtung zur Rotation (10) gemäß irgendeinem der vorigen Ansprüche, wobei die Mittel zum Entriegeln konfiguriert sind, um aktiv zu bleiben, wenn der Sitz (8) in einer Winkelzwischenposition zwischen den Winkelendpositionen ist.

6. Vorrichtung zur Rotation (10) gemäß irgendeinem der vorigen Ansprüche, wobei der bewegbare Anschlag (23) um ein Verbindungsgelenk (26) rotationsbewegbar ist, das von dem Sitz (8) getragen wird.

7. Vorrichtung zur Rotation (10) gemäß irgendeinem der vorigen Ansprüche, wobei der Sitz (8) mit einer hinteren Fußstütze (42) ausgestattet ist, die bewegbar ist zwischen einer Benutzungsposition und einer hochgeklappt-Position, wobei die Vorrichtung zur Rotation (10) aufweist Mittel zum Antreiben der Fußstütze (42) zu deren hochgeklappt-Position während der Rotation des Sitzes (8).

8. Vorrichtung zur Rotation gemäß irgendeinem der vorigen Ansprüche, aufweisend eine Struktur (12) zum Halten des Sitzes (8), wobei die Struktur zum Halten (12) aufweist einen seitlichen Anschlag (19) zum Klemmfesthalten des Sitzes (8) in der ersten oder der zweiten Endposition.

9. Vorrichtung zur Rotation gemäß einem der Ansprüche 4 oder 8, wobei die Struktur zum Halten (12) zwei Schultern (40) aufweist, die imstande sind, mit Mitteln zum Einbau des Sitzes (8) in diese Struktur zum Halten zusammenzuwirken, wenn der Sitz (8) in einer der Winkelendpositionen ist.

10. Schienenfahrzeug-Komfortvorrichtung, aufweisend einen Sitz (8), **dadurch gekennzeichnet, dass** sie aufweist eine Vorrichtung (10) zur Rotation des Sitzes (8) gemäß irgendeinem de Ansprüche 1 bis 9, an der der Sitz (8) angeordnet ist.

## Claims

1. Device (10) for rotating around a vertical axis for a seat (8), said seat (8) being intended to equip a railway vehicle, comprising:
- means for locking the seat (8) in first and second extreme angular positions of the seat (8), wherein the locking means comprise at least one movable abutment (23) adapted to be carried by the seat (8) and intended to interact with a complementary first or second fixed abutment (25) when the seat (8) is respectively in one of its first or second extreme angular positions, and
- means for unlocking the seat (8) and comprising:
• at least one pneumatic control member (28), and
• pneumatic means (30) for driving the movable abutment (23) from its locked position to its unlocked position when the control member (28) is actuated,
**characterized in that** the movable abutment (23) may be moved between a locked position in which it is located at the corresponding first or second fixed abutment (25), and an unlocked position in which it is above the corresponding first or second fixed abutment (25).

2. Rotation device (10) according to claim 1, wherein the pneumatic drive means (30) comprise a pneumatic jack (32), comprising a rod (34) interacting with the movable abutment (23).

3. Rotation device (10) according to claim 2, wherein the rod (34) is provided with a handle (36), allowing its manual movement in case of failure of the pneumatic drive means (30).

4. Rotation device (10) according to any one of the preceding claims, wherein it comprises a structure (12) for supporting the seat (8), and wherein the first control member (28) is in the form of a pedal arranged on the support structure (12).

5. Rotation device (10) according to any one of the preceding claims, wherein the unlocking means is configured to remain active when the seat (8) is in an intermediate angular position between the extreme angular positions.

6. Rotation device (10) according to any one of the preceding claims, wherein the movable abutment (23) is rotatable about a pivot linkage (26) carried by the seat (8).

7. Rotation device (10) according to any one of the preceding claims, wherein the seat (8) is equipped with a rear footrest (42) that is movable between a position of use and a raised position, wherein the rotation device (10) comprises means for driving the footrest (42) towards its raised position when the seat (8) is rotated.

8. Rotation device according to any one of the preceding claims, comprising a structure (12) for supporting the seat (8), wherein the support structure (12) comprises an abutment (19) for lateral wedging of the seat (8) in the first or second extreme position.

9. Rotation device according to any one of claims 4 or 8, wherein the support structure (12) comprises two shoulders (40) designed to interact with means for embedding the seat (8) on the support structure when the seat (8) is in one of the extreme angular positions

10. Device for enhanced comfort of a railway vehicle, comprising a seat (8), **characterized in that** it comprises a device (10) for rotating the seat (8) according to any one of claims 1 to 9 applicable to the seat (8).
